# EUROPÄISCHE PATENTSCHRIFT

(11) **EP 1 237 261 B1**
(45) Veröffentlichungstag und Bekanntmachung des Hinweises auf die Patenterteilung: **14.04.2004**
(21) Anmeldenummer: 01104790.9
(22) Anmeldetag: 27.02.2001
(51) Int. Cl.: H02K 15/03

(54) **Verfahren zur Herstellung eines gekapselten Rotors eines Permanentmagnetmotors**
Method for manufacturing an encapsulated rotor of a permanent magnet motor
Procédé pour la production d'un rotor encapsulé d'un moteur à aimant permanent

(43) Veröffentlichungstag der Anmeldung: 04.09.2002
(73) Patentinhaber: GRUNDFOS A/S, DK-8850 Bjerringbro (DK)
(72) Erfinder: Mikkelsen, Nils, 8830 Tjele (DK)
(74) Vertreter: Vollmann, Heiko, Dipl.-Ing.

(56) Entgegenhaltungen:
- US-A- 4 713 877
- US-A- 4 818 305
- US-A- 5 495 658

## Beschreibung

Die Erfindung betrifft ein Verfahren zur Herstellung eines gekapselten Rotors eines Permanentmagnetmotors.

Bei Rotoren von Permanentmagnetmotoren sind Permanentmagnete entweder direkt auf der Motorwelle oder auf einem auf der Rotorwelle sitzenden Rotoreisenteil, beispielsweise einem Rotorblechpaket anzuordnen. Es kann sich dabei um über den Umfang zu verteilende Einzelmagnete oder auch um ein oder mehrere ringförmige Magnete handeln, die entsprechend polarisiert sind. Da die an der Motorwelle anstehenden Drehmomente über den magnetischen Fluss zwischen Stator und Rotor und somit auch über die darin befindlichen Permanentmagnete erzeugt werden, sind die Magnete entsprechend stabil zu befestigen. Hierzu gibt es mechanische Lösungen, wie sie beispielsweise aus den US-Patenten 4855630 und 5140210 oder 5627423 bekannt sind. Solche mechanischen Befestigungen sind nicht nur aufwändig in der Fertigung, sondern neigen darüber hinaus zu Unwuchten, die gegebenenfalls noch auszugleichen sind.

Derartige mechanische Befestigungen sind darüber hinaus häufig dann nicht praktikabel, wenn der Rotor, wie bei Naßlaufmotoren üblich, vollständig gekapselt sein muss. Insbesondere bei den heutzutage verwendeten Magneten auf Neodyniumbasis muss unter allen Umständen verhindert werden, dass diese mit Wasser oder Feuchtigkeit in Verbindung kommen. Hier reichen Kunststoffummantelungen regelmäßig nicht aus, da sie in der Regel nicht diffusionsdicht sind.

Aus dem US-Patent 5,495,658 ist ein Verfahren bekannt, bei dem in dem späteren Rotormantel der Magnet eingeformt und gesintert wird, erst danach wird die Welle eingesetzt. Hierdurch soll die Maßhaltigkeit insbesondere am Rotormantel besonders gut sein. Das dort beschriebene Herstellungsverfahren ist jedoch für die Großserienfertigung gekapselter Rotoren wenig geeignet. Zum einen stellt die Befestigung der Welle ein Problem dar und zum anderen werden durch das Einpressen hohe Zugspannungen in den Magneten eingebracht, was nach dem Härten desselben vermieden werden sollte. Darüber hinaus ist dieses Herstellungsverfahren für mit einem Rotorblechpaket versehene Rotoren nicht geeignet, da die Verbindung zwischen Rotorblechpaket und Magnet nicht oder nur schwer steuerbar ist und in jedem Fall das Rotorblechpaket umfangseitig spanabhebend bearbeitet werden muss.

Vor diesem Hintergrund liegt der Erfindung die Aufgabe zugrunde, ein Verfahren zur Herstellung eines gekapselten Rotors eines Permanentmagnetmotors zu schaffen, mit dem solche Rotoren in der Serien-, insbesondere Großserienfertigung kostengünstig gefertigt werden können, insbesondere unter Vermeidung der vorgenannten Nachteile.

Diese Aufgabe wird gemäß der Erfindung durch das in Anspruch 1 definierte Verfahren gelöst. Vorteilhafte Ausgestaltungen und Weiterbildungen des Verfahrens sowie der Aufbau eines solchen Rotors sind in den Unteransprüchen, der nachfolgenden Beschreibung und der Zeichnung angegeben.

Das erfindungsgemäße Verfahren gliedert sich wie folgt:

Es wird zunächst einmal eine Welle oder gegebenenfalls eine bereits mit einem Rotoreisenteil versehene Welle mit einem gegebenenfalls mehrteiligen Vorformling, der den späteren Magneten bildet, und mit einem zylindrischen Blechabschnitt, der den späteren Blechmantel bildet, in ein Presswerkzeug eingelegt. Die Bauteile weisen dabei ausreichendes Spiel zueinander auf, so dass sie praktisch ohne Kraftaufwand ineinander gefügt werden können. In einem oder mehreren Pressvorgängen wird dann der Vorformling durch stirnseitige Druckkraftbeaufschlagung so weit verformt, dass er innen an der Welle (wenn der Magnet direkt auf der Welle sitzt) oder am Rotoreisenteil und außen am Blechmantel kraftschlüssig anliegt.

Dabei ist die Dimensionierung von Vorformling und Blechmantel so gestaltet, dass sich der Mantel während des Pressvorgangs bis zur Anlage am Presswerkzeug radial aufweiten kann. Nach diesem Umformvorgang wird der Blechmantel an beiden Stirnseiten durch einen Deckel verschlossen. Die Deckel werden an der Innenseite dicht mit der Welle oder mit dem Rotoreisenteil und an der Außenseite dicht mit dem Blechmantel verbunden. Die Magnetisierung und Härtung des Formlings erfolgt nach dem Pressvorgang.

Unter Rotoreisenteil im Sinne der vorliegenden Erfindung wird jedes den magnetischen Fluss leitende Bauteil zwischen Welle und Magnet verstanden. Typischerweise kann ein solches Bauteil durch ein Rotorblechpaket oder auch einen ferritischen Sinterkörper gebildet sein.

Das erfindungsgemäße Verfahren schafft nicht nur einen innigen kraftschlüssigen Verbund zwischen dem Formling bzw. dem Magneten, dem Blechmantel und dem Rotoreisenteil bzw. der Welle, sondern sorgt darüber hinaus praktisch in einem Arbeitsgang auch für eine hohe radiale Maßhaltigkeit des Rotors. Ein weiterer wesentlicher Vorteil des erfindungsgemäßen Verfahrens besteht insbesondere darin, dass bei einem mit Rotorblechpaket bestückten Rotor das Rotorblechpaket am Außenumfang nicht gesondert bearbeitet werden muss, da sich der Vorformling durch den Pressvorgang bündig an die Außenseite des Rotorblechpakets anlegt. Ein weiterer wesentlicher Vorteil des erfindungsgemäßen Verfahrens liegt darin, dass zur Magnetbefestigung kein Klebstoff eingesetzt werden muss, der insbesondere bei hohen Betriebstemperaturen in seinen Festigkeitseigenschaften nachlässt. Darüber hinaus ist es fertigungstechnisch von Vorteil, dass trotz der Verwendung eines gesinterten Vorformlings auf das im Fertigungsablauf stets kritische Hantieren mit Pulver verzichtet werden kann. Der als Sinterkörper aufgebaute Vorformling kann gesondert hergestellt werden, ohne den übrigen Fertigungs- und Montageprozeß zu tangieren.

Der Vorformling kann mehrteilig, beispielsweise in Form von Ringsegmenten oder axial aneinanderliegenden Ringen oder Ringsegmenten aufgebaut sein. Bevorzugt besteht der Vorformling aus zwei axial aneinander anliegenden Ringen, die vorzugsweise von beiden Axialseiten gleichzeitig oder auch nacheinander druckkraftbeaufschlagt werden. Durch das beidseitige Einbringen der Presskraft und dadurch, dass zwei Ringe axial aneinanderliegend eingesetzt werden, kann der Fließvorgang des Materials sehr gut gesteuert werden, es wird ein gleichmäßiger Materialfluß über die gesamte axiale Länge des Vorformlings gewährleistet.

Um den Rotor vollständig, d.h. flüssigkeitsdicht zu kapseln, ist es zweckmäßig, die Deckel durch Blechformteile zu bilden, die an ihrer Innenseite mit der Welle und an ihrer Außenseite mit dem Blechmantel verschweißt werden. Je nach Ausführung des Rotoreisenteils kann es wellenseitig ausreichend sein, den Blechmantel statt mit der Welle mit dem Rotoreisenteil zu verschweißen, um eine dichte Kapselung zu erreichen. Zum Verschweißen des Blechmantels mit den Deckeln ist es zweckmäßig, einerseits die Deckel napfförmig auszubilden und andererseits den Blechmantel in Achsrichtung des Motors gesehen über den Formling, d.h. den späteren Magneten hinaus überstehen zu lassen. Dann kann nämlich der Deckelrand mit dem Blechmantel in einem Bereich verschweißt werden, der von dem Formling bzw. dem Magneten so weit beabstandet ist, dass eine spürbare Wärmeeinwirkung, insbesondere eine den Magneten beeinträchtigende Wärmeeinwirkung durch den Schweißvorgang vermieden wird. Es kann somit der Schweißvorgang auch nach der Magnetisierung erfolgen. Darüber hinaus ist es auf diese Weise möglich, das Verschweißen von Mantel und Deckel von der Außenseite des Mantels her durchzuführen, indem beispielsweise mittels Laser durch den Mantel hindurch geschweißt wird.

Zweckmäßigerweise werden Presswerkzeug, Mantel und Vorformling so dimensioniert, dass der Mantel beim Pressvorgang über seine Elastizitäts grenze hinaus plastisch verformt wird. Durch diese Verformung des Mantels kann gleichzeitig eine Kalibrierung des Rotors erfolgen, so dass hierfür kein gesonderter Arbeitsgang anfällt.

Die Magnetisierung und Härtung des Formlings kann grundsätzlich zu beliebiger Zeit nach dem Umformvorgang erfolgen. Wenn eine Härtung durch externe Wärmeeinwirkung erfolgt, wird die Magnetisierung und anschließende Härtung vorteilhaft vor dem Verbinden des Blechmantels mit den Deckeln erfolgen, da durch die Wärmeeinwirkung beim Härtevorgang gegebenenfalls vorhandene Restfeuchte oder Gase entfernt werden.

Je nach Bauart und verwendetem Material kann jedoch auf eine Härtung durch externe Wärmeeinwirkung gegebenenfalls verzichtetwerden, dann erfolgt die Härtung während des Betriebs des Motors, beispielsweise während eines hierfür besonders konditionierten Probelaufs oder aber auch während des normalen Betriebs. Gegebenenfalls kann auf eine Härtung des Magneten auch vollständig verzichtet werden, da dieser mechanisch fest zwischen Blechmantel und Welle bzw. Blechmantel und Rotoreisenteil eingespannt ist und im Übrigen keinen mechanischen Beanspruchungen unterliegt.

Die Erfindung ist nachfolgend anhand eines in der Zeichnung dargestellten Ausführungsbeispiels näher erläutert. Es zeigen
- Figur 1: eine Seitenansicht eines nach dem erfindungsgemäßen Verfahren hergestellten Rotors,
- Figur 2: eine Stirnansicht in Richtung des Pfeils in Figur 1,
- Figur 3: einen Längsschnitt durch den Rotor gemäß Figur 1,
- Figur 4: in vergrößerter Darstellung die Einzelheit IV in Figur 2,
- Figur 5: in vergrößerter Darstellung die Einzelheit V in Figur 3 und
- Figur 6: den Herstellungsprozeß in vier Teilschritten anhand von schematischen Längsschnittdarstellungen.

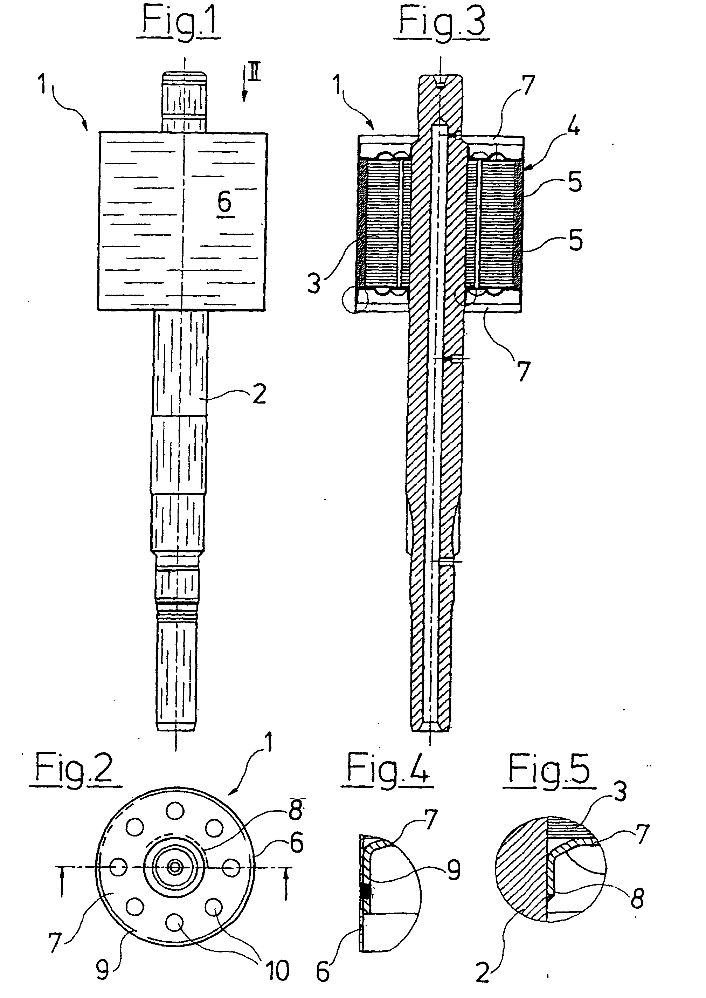

Der anhand der Figuren 1 bis 5 im Einzelnen dargestellte Rotor 1 besteht aus einer Welle 2, auf der ein Rotorblechpaket 3 befestigt ist. Das Rotorblechpaket 3 wird umfangseitig von einem Formling 4 umgeben, der aus zwei stirnseitig aneinanderstoßenden und zueinander fluchtenden Ringen 5 besteht und der den Magneten des Rotors bildet. Das Rotorblechpaket 3 ist umfangseitig unbearbeitet, der Formling 4 schließt ganzflächig und bündig an diesen unbearbeiteten Außenumfang des Rotorblechpakets 3 an und ist kraftschlüssig mit diesem verbunden.

Der Formling 4 wird an seinem Außenumfang durch einen im Wesentlichen zylindrischen Blechmantel 6 umgeben, der über den gesamten Außenumfang des Formlings 4 an diesem anliegt und kraftschlüssig mit diesem verbunden ist.

Der Bereich zwischen Welle 2 und Blechmantel 6 ist durch zwei Deckel 7 abgeschlossen, die jeweils in den zwischen Blechmantel 6 und Welle 2 gebildeten Raum eintauchen und durch Blechformteile gebildet sind. Die Deckel 7 weisen sowohl nach außen als auch nach innen einen vorstehenden Rand 8 bzw. 9 auf, über den sie mit dem über den Formling 4 überstehenden Teil des Blechmantels 6 bzw. der Welle 2 verschweißt sind. Die Einzelheit IV gemäß Figur 4 zeigt deutlich den Außenrand 9, der innerhalb des Blechmantels 6 anliegt und umlaufend mit diesem verschweißt ist. Der Blechmantel 6 steht axial über den Rand 9 hin über.

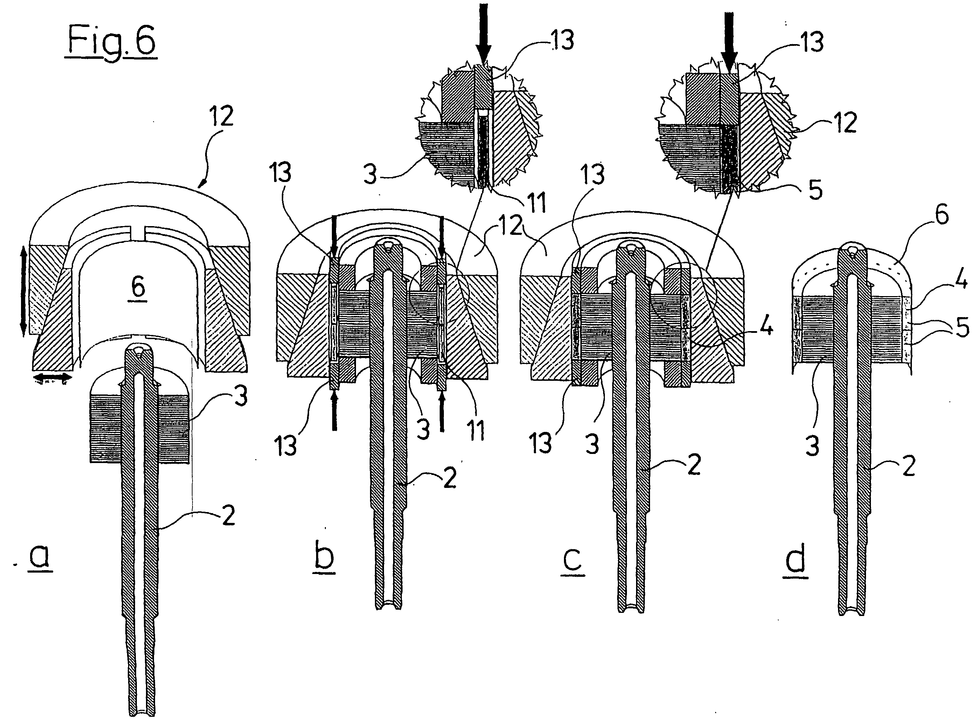

Die Einzelheit V gemäß Figur 5 zeigt die Verschweißung des Innenrands 8 mit der Welle 2, und zwar über eine stirnseitig am Innenrand 8 liegende Kehlnaht zwischen Welle 2 und Deckel 7. Die Deckel 7 weisen darüber hinaus acht kuppenförmige Einprägungen 10 auf, welche zur Stabilisierung und zur Vermeidung von Schwingungen dienen.

Der vorbeschriebene Rotor 1 ist hinsichtlich des Rotorblechpakets 3 und des Formlings 4, der den Magneten bildet, durch den Blechmantel 6 und die Deckel 7 sowie der Welle 2 hermetisch abgeschlossen und zum Einsatz im Spaltrohr eines Naßlaufmotors bestimmt. Dabei trägt die Welle 2 zu beiden Seiten des Rotorblechpakets 3 jenseits der Deckel 7 Axiallager. Das lange, freie Wellenende trägt beispielsweise ein Kreiselrad einer Umwälzpumpe.

Die Herstellung des vorbeschriebenen Rotors erfolgt wie anhand von Figur 6 dargestellt und nachfolgend beschrieben:

In einem ersten Schritt a werden zunächst die Welle 2 mit dem darauf befestigten Rotorblechpaket 3, der zylindrische Blechmantel 6 und ein Vorformling 11 - (dieser ist in Schritt b dargestellt) in ein Presswerkzeug 12 eingelegt. Der Vorformling 11 besteht aus zwei gleich großen und fluchtend aneinanderliegenden Ringen aus einem vorgesinterten magnetisierbaren Material auf Neodyniumbasis. Die Vorsinterung erfolgt so, dass ein fester Zusammenhalt des Vorformlings 11, d.h. der beiden Ringe und eine ausreichende Formbeständigkeit gegeben ist, jedoch eine Weiterverformbarkeit möglich ist, d.h. eine Aushärtung noch nicht erfolgt ist. Die Bauteile sind so aufeinander abgestimmt, dass sie mit Spiel ineinander liegen, wobei der Vorformling 11 in seiner axialen Länge das Rotorblechpaket 3 zu beiden Seiten hin überragt.

Innerhalb des mehrteilig aufgebauten und hier nicht im Einzelnen beschriebenen Presswerkzeugs werden die Bauteile in der in Figur 6 b dargestellten Lage fixiert. Der Blechmantel 6 liegt dabei mit Spiel innerhalb des Presswerkzeugs 12. Im Schritt c folgt nun der eigentliche Pressvorgang, und zwar gleichzeitig von oben und unten. Die die Druckkraft aufbringenden Stempel sind mit 13 gekennzeichnet. Die Presskraftrichtung ergibt sich aus den in Figur 6 b dargestellten Pfeilen. Die Stempel 13 werden so weit verfahren, dass der Vorformling 11 mit dem Rotorblechpaket 3 stirnseitig bündig abschließt und damit den Formling 4 bildet, so wie es anhand von Figur 6 c dargestellt ist. Die Dimensionierung der Volumina von Vorformling 11, dem zwischen Rotorblechpaket 3 und Blechmantel 6 gebildeten Freiraum sowie des Durchmessers des Blechmantels 6 sind so gewählt, dass dann, wenn der Vorformling 11 zu der in Figur 6 c gepressten Formling 4 umgeformt worden ist, dieser nicht nur ganzflächig und kraftschlüssig am Außenumfang des Rotorblechpakets 3 und am Innenumfang des Blechmantels 6 anliegt, sondern dass darüber hinaus der Blechmantel aufgrund des Umformdrucks radial plastisch bis zur Anlage am Presswerkzeug 12 verformt und damit kalibriert worden ist. Nach Entfernen des Presswerkzeugs 12, das zu diesem Zweck mehrteilig ausgebildet ist, ist nicht nur eine feste Verbindung zwischen Welle 2 , Rotorblechpaket 3, Formling 4 und Blechmantel 6 gebildet, sondern der Blechmantel 6 ist darüber hinaus bereits kalibriert, d.h. auf sein exaktes radiales Maß gebracht. In dieser Form (in Figur 6d ist der Rotor bereits völlig stabil) kann er magnetisiert und auch gehärtet werden, wonach dann abschließend die Deckel 7 eingefügt und von außen mittels Laser verschweißt werden. Die Magnetisierung und Härtung kann sowohl vor als auch nach der vollständigen Kapselung erfolgen.

Bei dem vorstehend beschriebenen Ausführungsbeispiel besteht der aus dem Vorformling 11 gebildete Formling 4 aus zwei Ringen, wodurch ein gleichmäßigerer Materialfluß bei Pressvorgang erreicht werden soll. Hierzu unterstützend sind zwei Stempel 13 von oben und von unten zum Aufbringen der Druckkräfte vorgesehen. Es versteht sich, dass der Formling bzw. der Vorformling grundsätzlich auch einstückig ausgebildet sein kann oder auch aus mehreren Segmenten bestehen kann.

### Bezugszeichenliste

- 1 -: Rotor
- 2 -: Welle
- 3 -: Rotorblechpaket
- 4 -: Formling
- 5 -: Ringe
- 6 -: Blechmantel
- 7 -: Deckel
- 8 -: Innenrand
- 9 -: Außenrand
- 10 -: Einprägungen
- 11 -: Vorformling
- 12 -: Presswerkzeug
- 13 -: Stempel

## Patentansprüche

1. Verfahren zur Herstellung eines gekapselten Rotors (1) eines Permanentmagnetmotors, insbesondere eines Naßlaufmotors, mit folgenden nacheinander auszuführenden Verfahrensschritten:
- eine gegebenenfalls mit Rotoreisenteil (3) versehene Welle (2) wird zusammen mit einem diese umgebenden, später einen Magneten bildenden Vorformling (11) und einem den Vorformling umgebenden Blechmantel (6) in ein Preßwerkzeug (12) eingelegt
- der Vorformling (11) wird durch stirnseitige Druckkraftbeaufschlagung so verformt, dass er innen an der Welle (2) oder dem gegebenenfalls/vorhandenen Rotoreisenteil (3) und außen am Blechmantel (6) kraftschlüssig anliegt, wobei der Mantel (6) durch den sich radial aufweitenden Vorformling (11) radial bis zur Anlage am Preßwerkzeug (12) aufgeweitet wird
- der Blechmantel (6) wird vor oder nach der Magnetisierung und Härtung des Formlings (4) stirnseitig durch zwei ringförmige Deckel (7) geschlossen, die dicht mit dem Blechmantel (6) und der Welle (2) oder dem Rotoreisenteil (3) verbunden werden.

2. Verfahren nach Anspruch 1, **dadurch gekennzeichnet, dass** der Vorformling (11) mehrteilig aufgebaut ist und in Form von Ringsegmenten und/oder axial aneinander anliegenden Ringen oder Ringsegmenten eingelegt wird.

3. Verfahren nach einem der vorhergehenden Ansprüche, **dadurch gekennzeichnet, dass** die Deckel (7) durch Blechformteile gebildet sind, die mit der Welle (2) und mit dem Blechmantel (6) durch Schweißen verbunden werden.

4. Verfahren nach einem der vorhergehenden Ansprüche, **dadurch gekennzeichnet, dass** der den Formling (4) in Achsrichtung des Rotors (1) überragende Blechmantel (6) durch Schweißen mit den Rändern (8,9) der Deckel (7) verbunden wird, wobei die Schweißung vorzugsweise von der Außenseite des Blechmantels (6) durch diesen hindurch erfolgt.

5. Verfahren nach einem der vorhergehenden Ansprüche, **dadurch gekennzeichnet, dass** der Mantel (6) durch den Preßvorgang über seine Elastizitätsgrenze hinaus kalibrierend verformt wird.

6. Verfahren nach einem der vorhergehenden Ansprüche, **dadurch gekennzeichnet, dass** die Druckkraftbeaufschlagung von zwei entgegengerichteten Stirnseiten vorzugsweise gleichzeitig erfolgt.

7. Verfahren nach einem der vorhergehenden Ansprüche, **dadurch gekennzeichnet, dass** die Magnetisierung und Härtung des Formlings (4) vor dem Verbinden des Blechmantels (6) mit den Deckeln (7) erfolgt.

8. Verfahren nach einem der vorhergehenden Ansprüche, **dadurch gekennzeichnet, dass** die Härtung des Formlings (4) während des Betriebs des Rotors (1) im Motor erfolgt.

9. Verfahren nach einem der vorhergehenden Ansprüche, **dadurch gekennzeichnet, daß** ein Vorformling verwendet wird, dessen axiale Länge größer als die des zugehörigen Rotoreisenteils (3) ist.

## Claims

1. A method for manufacturing a canned rotor (1) of a permanent magnet motor, in particular a wet-running motor, with the following method steps to be carried out after one another:
- a shaft (2), where appropriate provided with a rotor iron part (3) together with a pre-blank (11) surrounding this and later forming a magnet and with a [sheet] metal casing (6) surrounding the pre-blank is applied into a pressing tool (12)
- the pre-blank (11) is deformed by end-face pressure impingement such that it bears with a non-positive fit at the inside on the shaft (2) or the rotor iron part (3) which is present as the case may be, and at the outside on the [sheet] metal casing (6), wherein the casing (6) is widened radially by the radially widening pre-blank (11), until its bearing on the pressing tool (12)
- the [sheet] metal casing (6) before or after the magnetisation and hardening of the blank (4) is closed at the end face by two annular lids (7) which are tightly connected to the [sheet] metal casing (6) and the shaft (2) or to the rotor iron part (3)

2. A method according to claim 1, **characterised in that** the pre-blank (11) is constructed of several parts and is applied in the form of ring segments and/or rings or ring segments, bearing axially on one another.

3. A method according to one of the preceding claims, **characterised in that** the lids (7) are formed by sheet metal shape parts which are connected to the shaft (2) and to the [sheet] metal casing (6) by welding.

4. A method according to one of the preceding claims, **characterised in that** the [sheet] metal casing (6) projecting beyond the blank (4) in the axial direction of the rotor (1) is connected to the edges (8, 9) of the lid (7) by welding, wherein the welding is preferably effected from the outside of the [sheet] metal casing (6) through this.

5. A method according to one of the preceding claims, **characterised in that** the casing (6) is deformed in a calibrating manner beyond its elasticity limit by the pressing procedure.

6. A method according to one of the preceding claims, **characterised in that** the pressure impingement is effected from two opposite end faces, preferably simultaneously.

7. A method according to one of the preceding claims, **characterised in that** the magnetisation and hardening of the blank (4) is effected before the connection of the [sheet] metal casing (6) to the lids (7).

8. A method according to one of the preceding claims, **characterised in that** the hardening of the blank (4) is effected in the motor during the operation of the rotor (1).

9. A method according to one of the preceding claims, **characterised in that** a pre-blank is used whose axial length is larger than that of the associated rotor iron part (3).

## Revendications

1. Procédé pour fabriquer un rotor encapsulé (1) d'un moteur à aimant permanent, notamment d'un moteur à fonctionnement en milieu humide, comprenant les étapes de procédé suivantes à exécuter successivement :
- on dépose dans un outillage de presse (12), un arbre (2), le cas échéant pourvu de la partie de rotor en fer (3), en commun avec une préforme (11) qui entoure l'arbre et formera un aimant ultérieurement, ainsi qu'avec une enveloppe de tôle (6) qui entoure la préforme
- on déforme la préforme (11) en la soumettant frontalement à une force de compression, de façon qu'elle s'appuie, en y formant une liaison par adhérence, à l'intérieur, sur l'arbre (2) ou la partie de rotor en fer (3) éventuellement prévue, et à l'extérieur, sur l'enveloppe de tôle (6), l'enveloppe (6) étant alors évasée radialement jusqu'à venir s'appuyer sur l'outillage de presse (12), sous l'effet de la préforme (11) qui s'évase radialement
- on ferme l'enveloppe de tôle (6) sur les extrémités frontales, avant ou après la magnétisation et le durcissement de l'ébauche de formage (4), au moyen de deux couvercles (7) de forme annulaire, que l'on relie de manière étanche à l'enveloppe de tôle (6) et l'arbre (2) ou la partie de rotor en fer (3).

2. Procédé selon la revendication 1, **caractérisé en ce que** l'ébauche de formage (11) est d'une configuration en plusieurs parties et est déposée, dans l'outillage, sous la forme de segments d'anneau et/ou d'anneaux ou de segments d'anneau axialement adjacents les uns aux autres.

3. Procédé selon l'une des revendications précédentes, **caractérisé en ce que** les couvercles (7) sont formés par des pièces de formage en tôle, qui sont reliées par soudage à l'arbre (2) et à l'enveloppe de tôle (6).

4. Procédé selon l'une des revendications précédentes, **caractérisé en ce que** l'enveloppe de tôle (6) dépassant de l'ébauche de formage (4) dans la direction axiale du rotor (1), est reliée par soudage aux bords (8, 9) des couvercles (7), le soudage s'effectuant de préférence à partir du côté extérieur de l'enveloppe de tôle (6), à travers celle-ci.

5. Procédé selon l'une des revendications précédentes, **caractérisé en ce que** l'enveloppe (6) est déformée, par l'opération de pressage, au-delà de sa limite d'élasticité, en produisant son calibrage.

6. Procédé selon l'une des revendications précédentes, **caractérisé en ce que** la sollicitation par la force de compression s'effectue à partir de deux faces frontales d'orientation opposée, de préférence simultanément.

7. Procédé selon l'une des revendications précédentes, **caractérisé en ce que** la magnétisation et le durcissement de l'ébauche de formage (4) sont effectués avant la réalisation de la liaison de l'enveloppe de tôle (6) aux couvercles (7).

8. Procédé selon l'une des revendications précédentes, **caractérisé en ce que** le durcissement de l'ébauche de formage (4) s'effectue durant le fonctionnement du rotor (1), dans le moteur.

9. Procédé selon l'une des revendications précédentes, **caractérisé en ce que** l'on utilise une préforme dont la longueur axiale est supérieure à celle de la partie de rotor en fer (3) associée.
